# EUROPÄISCHE PATENTSCHRIFT

(11) **EP 3 018 380 B1**
(45) Veröffentlichungstag und Bekanntmachung des Hinweises auf die Patenterteilung: **29.08.2018**
(21) Anmeldenummer: 15002850.4
(22) Anmeldetag: 06.10.2015
(51) Int. Cl.: F16D 63/00

(54) **REIBGEHEMME MIT KRAFTMESSEINRICHTUNG**
FRICTIONAL BLOCKING DEVICE WITH A FORCE MEASURING DEVICE
FREIN A FRICTION DOTE D'UN DISPOSITIF DE MESURE DE FORCE

(30) Priorität: 06.10.2014 DE 102014014509
(43) Veröffentlichungstag der Anmeldung: 11.05.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 2 522 874
- EP-A2- 1 384 638
- EP-A2- 2 604 882
- WO-A1-2004/031607
- DE-A1- 10 230 008
- JP-A- 2000 062 591
- US-A- 5 651 431
- US-A1- 2004 187 591
- US-A1- 2008 098 826

## Beschreibung

Die Erfindung betrifft eine Brems- und/oder Klemmvorrichtung eines an mindestens einer Führungsschiene geführten Schlittens, wobei die Vorrichtung mindestens ein über ein Getriebe betätigbares Reibgehemme umfasst, das wenigstens eine in einem Gehäuse gelagerte, an die Führungsschiene anpressbare Reibbacke aufweist, wobei das mit Hilfe von Fremdenergie bewegte Getriebe zur Be- und zur Entlastung des Reibgehemmes, pro Be- und Entlastungsrichtung, mittels mindestens eines Stellgliedes oder mittels eines Federsystems, das mindestens ein Federelement umfasst, bewegbar ist.

Aus der DE 10 2111 121 890 A1 ist eine Brems- und/oder Klemmvorrichtung mit einer Betriebszustandsüberwachung bekannt. Für die Betriebszustandsüberwachung ist am Gehäuse ein Verformungsrahmen befestigt, in dem Sensoren in Form von Dehnmeßstreifen angeordnet sind, die sich bei betriebsbedingt auftretenden Brems- und oder Klemmkräften dehnen. Eine Auswerteelektronik ermittelt aus den Sensorwerten diverse optisch anzeigbare Betriebszustände. So kann u.a. anzeigt werden, ob die Klemmung geöffnet oder betätigt ist. Ggf. werden auch verschiedene Kraftgrenzwerte angezeigt.

In der DE 101 05 692 A1 wird eine Linearführungsvorrichtung beschrieben, in der auch eine Bremsvorrichtung integriert ist. In der Bremsvorrichtung befindet sich zwischen einem den Bremsdruck erzeugenden Hydraulikkolben und einem Bremsbacken eine Kraftmessdose. Im Bremsbacken ist ein Stift befestigt, der über einen kleinflächigen Anschlag auf dem Boden der Kraftmessdose aufliegt. Auf der Innenseite des Bodens der Kraftmessdose ist ein konventioneller großflächiger Dehnmessstreifen befestigt. Belastet der Hydraulikkolben die Kraftmessdose, wird der Dehnmessstreifen gedehnt.
Die WO 2004/031 607 A1 beschreibt eine Bremszuspanneinrichtung einer Schienenfahrzeugbremse. Innerhalb der Bremsenkinematik gibt es einen Gelenkbolzen, dessen Scherbelastung mit Hilfe von Dehnmessstreifen ermittelt wird.
Aus der EP 1 384 638 A2 ist ein Verfahren bekannt, mit dem sich der Verschleiß der sich primär abnutzenden Bremsenteile überwachen lässt. Dabei wird neben dem berührungslosen Messen der Bremsbelagstemperatur die Relativgeschwindigkeit der Reibbeläge, die Bremskraft, die Bremszeit der einzelnen Bremsvorgänge und die Anzahl und das Ausmaß der einzelnen Bremsbelagsnachstellvorgänge erfasst, um daraus den Gesamtverschleiß zu errechnen. Aus Letzterem lässt sich ein Verschleißwarnsignal herleiten.
Die EP 2 604 882 A2 beschreibt eine Brems- und/oder Klemmvorrichtung mit einem eine Führungsschiene c-förmig umgreifenden Gehäuse gemäß dem Oberbegriff des Anspruchs 1. In den beiden äußeren Bereichen des Gehäuses sind betätigbare Reibgehemme angeordnet. Der zwischen den Reibgehemmen liegende Gehäusebereich wird beim Klemmen auf Biegung belastet. Diese Biegung wird mittels Dehnmessstreifen erfasst und überwacht.
Aus der US 2008/0098 826 A1 ist ein Bremskraftmessgerät für Kfz-Radbremsen bekannt, bei dem im Kraftfluss isoliert eine separate dünne Metallscheibe zwischen zwei Bremsenteilen angeordnet ist. Die Metallscheibe ist beidseitig mit einer diamantähnlichen Kohlenstoffschicht beschichtet ist. Die Änderung des ohmschen Widerstands der parallel geschalteten Beschichtungen ist ein Maß für die Bremskraft.
Die US 2004/0187 591 A1 beschreibt eine Sensorenanordnung in einer selbstverstärkenden Fahrzeugbremse. Der einzelne Sensor besteht aus einem an einem magnetfeldänderungsempfindlichen Detektor vorbeigeführten Magneten. Der Magnet ist an einer durch die Bremskraft belast- und verformbaren Biegefeder befestigt.
Der vorliegenden Erfindung liegt die Problemstellung zugrunde, eine Brems- und/oder Klemmvorrichtung so mit einem oder mehreren Sensoren auszustatten, dass der Betriebszustand der Vorrichtung zu jedem Zeitpunkt auf kleinem Bauraum sicher und direkt erfasst sowie wiedergegeben werden kann.

Diese Problemstellung wird mit den Merkmalen der Patentansprüche 1 und 7 gelöst. Dazu ist in der Vorrichtung, sich quer zur Richtung des Kraftflusses der aufzubauenden Brems- und/oder Klemmkraft ausbreitend, mindestens ein druckkraftaufnehmender Dünnschichtsensor im Bereich mindestens eines Reibgehemmes angeordnet. Der Dünnschichtsensor ist innerhalb des oder der Reibgehemme in der jeweiligen Reibbacke integriert.
Die einzelne Brems- und/oder Klemmvorrichtung umfasst mindestens ein Reibgehemme, das direkt oder gemäß der Erfindung, über ein Getriebe betätigbar ist. Das Reibgehemme wirkt über eine Reibbacke auf eine Führungsschiene, auf der ein Maschinen- oder Messgeräteschlitten gelagert und geführt ist, der diese Vorrichtung trägt. Das einzelne Reibgehemme entwickelt seine Brems- und/oder Klemmwirkung beispielsweise durch das Freisetzen von in einem Federspeicher gespeicherter Federenergie, die über das Schiebekeilgetriebe auf die Reibbacke übertragen wird.

Das Reibgehemme kann hierbei direkt angetrieben werden (nicht gemäß der Erfindung), z.B. mittels einer hydraulischen Zylinder-Kolben-Einheit. Bei Stellgliedern kleinerer Schubkraft werden zwischen das Stellglied und das Reibgehemme Getriebe, gemäß der Erfindung, eingebaut. Diese können z.B. Schiebekeilgetriebe, Exzentergetriebe, Hebelgetriebe, Spindelgetriebe und dergleichen sein.

Die Führungsschienen, an denen die Reibbacken zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.
Zur Betriebszustandsüberwachung werden bei der vorliegenden Erfindung innerhalb der Brems- und/oder Klemmvorrichtung betriebsbedingte Kräfte erfasst und ausgewertet. Dazu werden Drucksensoren im Vorrichtungsgehäuse an Reibgehemmeteilen oder an Teilen von ggf. vorhandenen Getrieben angeordnet. Die betriebsbedingt auftretenden Brems- und/oder Klemmkräfte stauchen die jeweiligen Drucksensoren z.B. im einstelligen Mikrometerbereich.

Die Drucksensoren können direkt auf den mit Druckkräften belasteten Bauteilen angeordnet sein oder separat in eigens hierfür entwickelten - z.B. modulartig aufgebauten - Kraftaufnehmern integriert werden. In der weiteren Einleitung wird zunächst nicht zwischen Kraftaufnehmern und Drucksensoren unterschieden.
Der einzelne Drucksensor ist ein dünner, flächiger Dünnschichtsensor, der sich räumlich im Wesentlichen - zumindest partiell - im Ausführungsbeispiel quer zur Richtung der auf die Reibbacke oder Reibbacken wirkenden Brems- und/oder Klemmkraft ausdehnt. Die empfindliche Sensorschicht, die ein Verbund aus mehreren verschiedenen Materialschichten ist, bildet mindestens bereichsweise einen ebenen, dünnen und harten Film, auf den senkrecht die zur messende Kraft wirkt.

Die Drucksensoren werden, gemäß der Erfindung, im Bereich der Reibbacken angeordnet. Sie können an der Rückseite der einzelnen Reibbacke so sitzen, dass das die Reibbacken zustellende Getriebeteil, hier z.B. ein Druckstück, direkt am Sensor anliegt. Ggf. kann der Sensor auch an der dem nächsten Reibbacken zugewandten Stirnseite des Druckstücks befestigt sein, um den benachbarten, sensorfreien Reibbacken zu kontaktieren.
Ferner ist es möglich, den Drucksensor im Reibbacken unterhalb des Reibbelags zu platzieren. Wird ein Dünnschichtsensor mit einer besonders verschleißfesten Oberfläche genutzt, kann der Drucksensor sogar direkt auf dem Reibbelag in der Haft- und Gleitreibzone der Klemm- und/oder Bremsvorrichtung sitzen und somit beim Bremsen direkt an der Führungsschiene anliegen. Nicht gemäß der Erfindung kann der jeweilige Drucksensor an Gehäuseteilen angeordnet sein, an denen die zustellenden Getriebe ihre Zustellkräfte abstützen. Im Ausführungsbeispiel wären das z.B. die Einstellschrauben. So könnte der Sensor an der Stelle sitzen, an der die käfiggeführten Zylinderrollen des Schiebekeilgetriebes abrollen. Zwischen die Einstellschraube und die jeweilige Zylinderrolle kann auch ein druckverteilender sensortragender Kraftaufnehmer eingelegt sein.

Es ist auch machbar, nicht gemäß der Erfindung, den oder die Drucksensoren vor der letzten Getriebestufe einzubauen. Beispielsweise könnte mindestens ein Sensor zwischen einem Pneumatikkolben eines Stellglieds und der entsprechenden Kolbenstange des Pneumatikkolbens eingebaut sein.

Anstelle des Pneumatikkolbens ist auch ein federbelasteter Teller eines als Federspeicher ausgebildeten Stellglieds denkbar.

Die gesamte Betriebszustandsüberwachung ist in diesem Fall als modulares Anbauteil am Vorrichtungsgehäuse anbringbar. Sie umfasst eine Auswerteelektronik, die aus den von mindestens einem druckkraftaufnehmenden Sensor gelieferten Signalen das Bremsen und/oder Klemmen der Vorrichtung erfasst. Dabei werden die jeweils auftretenden Brems- und/oder Klemmkräfte ermittelt und die Anzahl aller Brems- und/oder Klemmvorgänge gezählt. Aus der Änderung der Höhe der Brems- und/oder Klemmkraft von mindestens 50 Prozent aller Brems- und/oder Klemmvorgänge wird der Verschleiß an den Bremsbelägen und der Führungsschiene ermittelt und einer Dokumentation zugeführt. Aus den ermittelten Werten wird ein Signal abgeleitet, das einen Wartungs- oder Vorrichtungstausch anzeigt. Zusätzlich kann auch die Temperatur der Reibbeläge ausgegeben werden. Bei einem Überschreiten einer bestimmbaren Grenztemperatur kann ein Alarmsignal ausgelöst werden.

Der hier nur beispielsweise in einem Kraftaufnehmer integrierte Drucksensor ist z.B. ein Halbleiter mit einer piezoresistiven Materialeigenschaft. Der Sensorwerkstoff ändert seinen elektrischen Widerstand zumindest bereichsweise bzw. abschnittsweise proportional zu seiner Materialstauchung. Mit zunehmender Belastung in Form steigender Brems- und/oder Klemmkraft nimmt der hochohmige elektrische Widerstand ab. Die hohe Empfindlichkeit des piezoresistiven Effekts wird begleitet von einer großen Temperaturempfindlichkeit, was ggf. einen im Betrieb unbelasteten Vergleichssensor erfordert. Der Drucksensor kann einzeln oder auch als Teil einer Drucksensorgruppe pro Kraftmessstelle eingebaut werden.

Weitere Einzelheiten der Erfindung ergeben sich aus den Unteransprüchen. Es folgt eine Beschreibung eines schematisch dargestellten Ausführungsbeispiels.
- Figur 1:: perspektivische Ansicht einer mit einer Kraftmesseinrichtung ausgestatteten Brems- und/oder Klemmvorrichtung;
- Figur 2:: Teilschnitte der Brems- und/oder Klemmvorrichtung in perspektivische Ansicht;
- Figur 3:: Querschnitt zu Figur 2;
- Figur 4:: Längsschnitt zu Figur 2;
- Figur 5:: Reibbacke mit integriertem Kraftaufnehmer, perspektivische Ansicht der Rückseite, vergrößert;
- Figur 6:: Längsschnitt einer Reibbacke mit Verdrahtung, vergrößert;
- Figur 7:: Kraftaufnehmer, perspektivische Ansicht mit Drucksensorfeld, vergrößert;
- Figur 8:: Seitenansicht des verdrahteten Kraftaufnehmers, vergrößert mit überhöhtem Drucksensorfeld;
- Figur 9:: Draufsicht auf den verdrahteten Kraftaufnehmer, vergrößert;
- Figur 10:: Längsschnitt der Reibbacke mit elastischer Abfederung des Kraftaufnehmers, vergrößert.

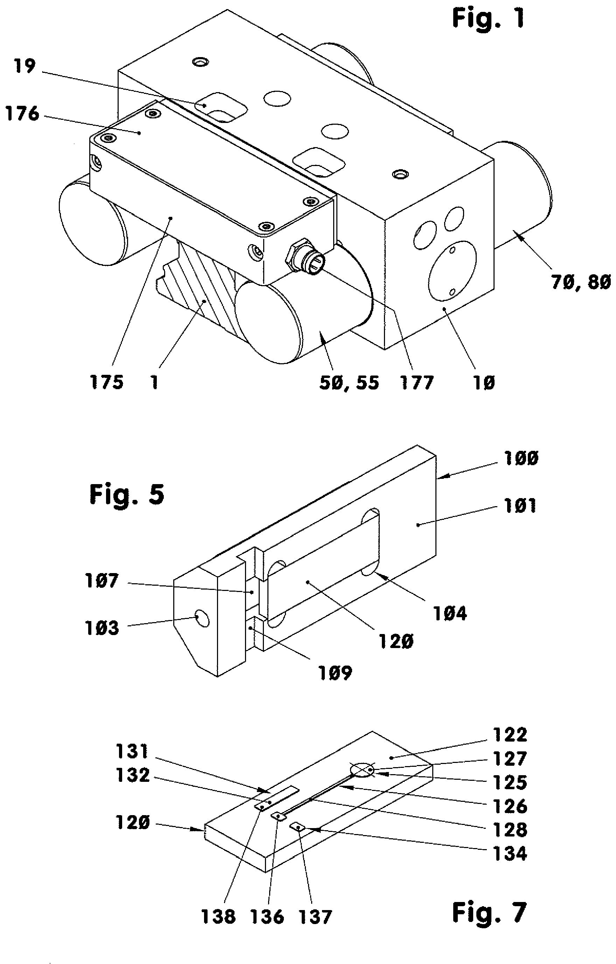

Die Figuren 1 bis 4 zeigen eine Brems- und/oder Klemmvorrichtung, wie sie beispielsweise in vielen Horizontal- oder Vertikalschlitten u.a. in Werkzeug- und Messmaschinen verwendet wird. Die Vorrichtung der vorliegenden Ausführungsform ist hierbei am entsprechenden Geräteschlitten so angeordnet, dass sie die - die Schlittenlängsführung vorgebende - Führungsschiene (1) mit jeweils zwei Reibgehemmen umgreift. Die Vorrichtung weist hier als mit Fremdenenergie versorgbare Stellglieder (55, 60, 70) drei Druckkolben (56, 71, 81) auf, die bei pneumatischer oder hydraulischer Parallelschaltung koaxial zueinander angeordnet sind. Ein viertes Stellglied (50) ist ein Federspeicher.

Die Figur 1 zeigt als Komplettansicht die die Führungsschiene (1) umklammernde Brems- und/oder Klemmvorrichtung. An der vorderen großen Stirnseite des Gehäuses (10) ist oberhalb der Führungsschiene (1) ein Elektronikgehäuse (175) zur Aufnahme der mit der Kraftmessung verbundenen Auswerteelektronik befestigt.

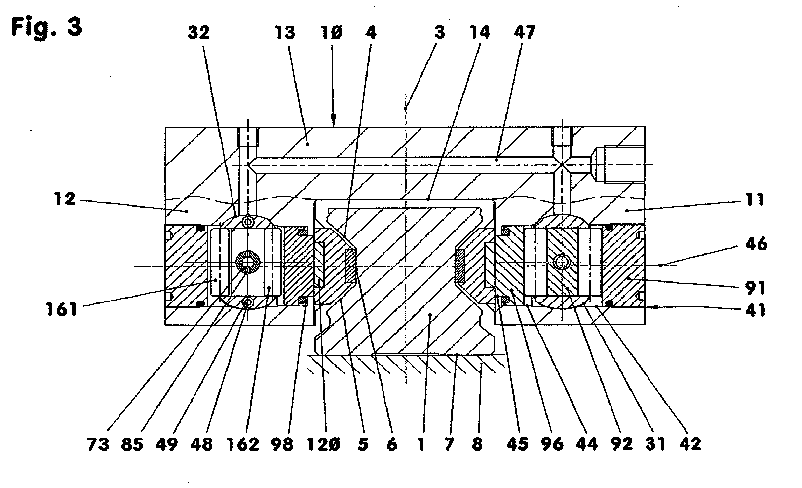

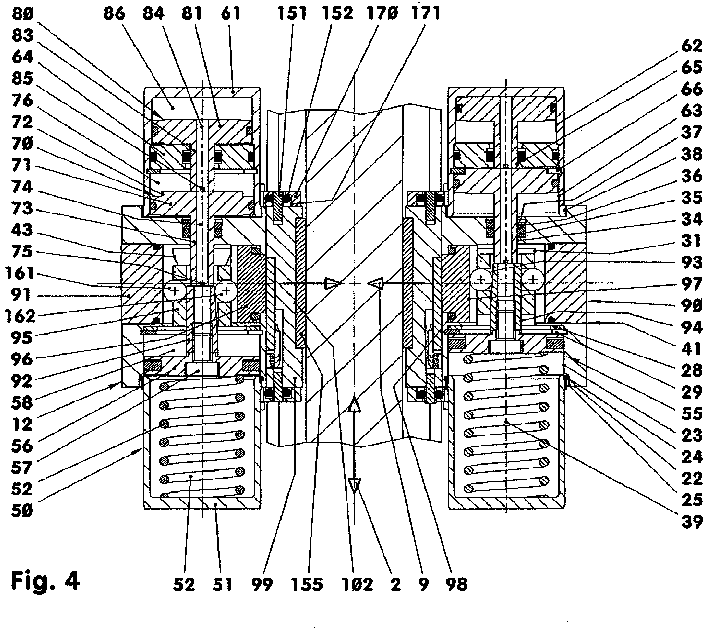

In den Figuren 3 und 4 ist ein Abschnitt einer doppelprismatischen Führungsschiene (1) dargestellt. Die Führungsschiene (1) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche (7) z.B. das sie tragende Maschinenbett (8).

An den im Querschnitt der Figur 3 schräg angeordneten Führungsflächen (4, 5) liegen die korrespondierenden Führungsflächen des gelagerten Schlittens direkt gleitgelagert oder indirekt wälzgelagert an. Zwischen je zwei Führungsflächen (4, 5) befindet sich hier je eine den Nutgrund bildende vertikale Stegfläche (6), an der sich beim Bremsen die Reibbeläge (155) der Reibgehemme (90) abstützen.

Die Führungsschiene (1) wird vom Gehäuse (10) der Vorrichtung beidseitig umgriffen. Im Gehäuse (10) sind zwei gegeneinander Brems- und Klemmkräfte erzeugende Vorrichtungen integriert. Das im Prinzip c-förmige Gehäuse (10) besteht aus einem Quader, der quer zu seiner Längsausdehnung eine Umgriffsnut (14) aufweist, die einen rechteckförmigen Querschnitt hat. In dem durch die Nut (14) entstandenen Freiraum ist die Führungsschiene (1) platziert. Die Nutbreite ist wenige Millimeter breiter als die Führungsschienenbreite in dem vom Gehäuse (10) umgriffenen Bereich. Die Nuttiefe entspricht z.B. 85% der Führungsschienenhöhe.

Das Gehäuse (10) hat z.B. gemäß Figur 3 - quer zur Führungslängsrichtung (2) - eine Gesamtbreite, die ca. die dreifache Breite der Führungsschiene ausmacht. Die Gesamthöhe des Gehäuses (10) beträgt z.B. 134% der Führungsschienenhöhe. Die Länge des Gehäuses (10) - in der Zeichnungsebene von Figur 3 gemessen - entspricht beispielsweise dem Eineinhalbfachen der Führungsschienenhöhe aus Figur 3.

Das Gehäuse (10) hat eine rechte (11) und eine linke Gehäusezone (12). Beide Zonen (11, 12), befinden sich unterhalb einer Flanschzone (13). Jede Gehäusezone (11, 12) weist eine mehrstufige Durchgangsbohrung (23, 31, 34, 38) auf, deren Mittellinie (39) parallel zur Führungslängsrichtung (2) orientiert ist, vgl. Figur 4. Die Durchgangsbohrung setzt sich aus einer Zylinderflächenbohrung (23), einer Käfigsitzausnehmung (31), einer Kolbenstangenbohrung (34) und einer Zylinderbüchsenbohrung (38) zusammen.

Im Bereich der Öffnung der Zylinderflächenbohrung (23) befindet sich ein Feingewinde und eine einen Quetschring (24) aufnehmende Nut. Dort ist z.B. auch eine Entlüftungshalbrundnut (25) eingearbeitet, die parallel zur Mittellinie (39) ausgerichtet ist.

Am planen ringflächigen Grund der Zylinderflächenbohrung (23) liegt eine Anschlagscheibe (28), die dort mittels eines Sicherungsrings (29) gehalten wird. Hinter der Anschlagscheibe (28) liegt die Käfigsitzausnehmung (31). Sie erstreckt sich über den gesamten Bereich einer quer zur Stufenbohrung (23, 31, 34, 38) vorhandenen Gehemmebohrung (41). Die Ausnehmung (31) ist ein Langloch, dessen Breite geringfügig größer ist als die eines dort eingebauten Käfigs (95). Die maximale Höhe der Ausnehmung (31) entspricht dem Durchmesser der Zylinderflächenbohrung (23). Die Ausnehmung (31) hat im Querschnitt, an den nichtgeradlinigen Flanken, eine ovale Kontur (32), die im oberen und unteren Bereich abschnittsweise der Kontur der Zylinderflächenbohrung folgt.

An die Käfigsitzausnehmung (31) bzw. die Hauptbohrung (42), vgl. Figuren 4 und 3, schließt sich die erheblich kleinere, kurze Kolbenstangenbohrung (34) an. Sie bildet den engsten Querschnitt der gesamten Stufenbohrung (23, 31, 34, 38). In der Stangenbohrung (34) befindet sich eine Eindrehung, in der ein Dichtring (35) und eine Stützscheibe (36) mittels eines Sicherungsringes (37) gehalten werden. Die Eindrehung mündet in eine Zylinderbüchsenbohrung (38), deren Durchmesser z.B. dem Durchmesser der Zylinderflächenbohrung (23) entspricht. Die Zylinderbüchsenbohrung (38) trägt ein Feingewinde. Alle Abschnitte der Stufenbohrung liegen koaxial auf der Mittellinie (39).

Die quer zur Stufenbohrung (23, 31, 34, 38) verlaufende Gehemmebohrung (41) hat eine Mittellinie (46), die die Mittellinien (39) der Stufenbohrungen im Ausführungsbeispiel im Abstand von z.B. 1 mm kreuzt. Beispielsweise schneidet die Mittellinie (46) die Mittellinie (2) der Führungsschiene (1). Letztere (2) liegt in einer Ebene, die durch zwei Geraden definiert wird, die wiederum durch den Schnitt von jeweils zwei an eine Stegfläche (6) anschließende ebenen Führungsflächen (4, 5) erzeugt werden. Die Mittellinie (46) ist um ca. 7% der Tiefe des Gehäuses (10) zur Zylinderbüchsenbohrung (38) hin versetzt.

Jede Gehemmebohrung (41) hat drei abgestufte Bereiche, vgl. Figur 3. Von der Gehäuseaußenseite her sind das eine Hauptbohrung (42), eine Druckstückführungsbohrung (44) und eine Austrittsbohrung (45). Die Hauptbohrung (42) schneidet sich mit der Käfigsitzausnehmung (31). In der Gehäusezone (12), siehe Figur 4, kann man die Durchdringungslinie (43) erkennen.

In diesem Bereich sitzt der Käfig (95), der zwei Zylinderrollen (161, 162) lagert. Beide Zylinderrollen (161, 162) liegen an einem Schiebekeil (92) eines Schiebekeilgetriebes an. Die außenliegende Zylinderrolle (161) stützt sich an einer Einstellschraube (91) ab, während die innenliegende Zylinderrolle (162) an einem hier unbelasteten Druckstück (96) anliegt.

Im Bereich der Einstellschraube (91) trägt die Hauptbohrung (42) ein Feingewinde. Die Einstellschraube (91) ist eine zylindrische Scheibe, die an der äußeren Stirnfläche Bohrungen für den Eingriff eines Zapfenschlüssels aufweist. Sie hat ein Außengewinde, das in einer Ringnut endet. In der Nut ist ein Quetschring als Schraubensicherung eingelassen.

Das Druckstück (96) ist ein zylindrischer Kolben mit einer angeformten Kolbenstange. Die Kolbenstange ragt bei betätigtem Reibgehemme (90) aus der Austrittsbohrung (45) heraus. Am Übergang der Kolbenstange zum Kolben befindet sich eine Stirnnut, in der ein elastischer Rückhubring (98) mit z.B. rechteckigem Einzelquerschnitt sitzt.

Vor der außenseitigen Stirnfläche (97) des Druckstückes (96) ist in der Umgriffsnut (14) eine Reibbacke (100) angeordnet. Die Reibbacke (100) ist hier beispielsweise ein prismatischer Körper, dessen Kontur teilweise mit der Nutkontur der Führungsschiene (1) korrespondiert. Sie ist im Wesentlichen ein langgestreckter Quader, der zur Führungsschiene (1) hin im Bereich deren Führungsflächen (4, 5) je eine 45°-Schräge aufweist. Die Höhe der Reibbacke (100) entspricht z.B. der doppelten Reibbackenbreite. In der der Stegfläche (6) der Führungsschiene (1) zugewandten Außenfläche ist beispielsweise ein Reibbelag (155) eingepresst. Dazu ist in die Reibbacke (100) von der Außenfläche her eine Belagvertiefung (102) eingearbeitet, deren Tiefe z.B. das Vierfache des Betrages ist, um den der Reibbelag (155) über die umliegende Außenfläche übersteht. Der Überstand beträgt beispielsweise 0,5 mm. Die Belagvertiefung (102) stellt sich in der Außenfläche als Rechteck mit abgerundeten Ecken dar. Die Breite ist geringfügig kleiner als die Höhenausdehnung der Stegfläche (6). Die Länge des Reibbelags (155) entspricht z.B. dem Vierfachen seiner Breite.

Für den Reibbelag (155) der Reibbacke (100) wird z.B. ein pulvermetallurgisch hergestellter Reibwerkstoff auf Bronzebasis verwendet. Der Reibwerkstoff enthält zusätzlich keramische Bestandteile. Der Reibbelag (155) ist in die Belagvertiefung (102) eingepresst. Ggf. ist der Reibbelag (155) an den seitlichen Wandungen der Belagvertiefung (102) verklebt oder verlötet.

Es ist auch möglich den Reibbelag, z.B. als eine Reihe von mehreren runden, eckigen oder polygonalen Scheiben, in entsprechende Vertiefungen einer Reibbacke anzuordnen.

In der Rückseite der Reibbacke (100) befindet sich eine im Wesentlichen T-förmige Ausnehmung (104), die der Aufnahme des Kraftaufnehmers (120) und dessen Verdrahtung dient. Die Ausnehmung (104) teilt sich in die nahezu quaderförmige Basisausnehmung (105) und die daran anschließende Kabelnut (109) auf. Die Ausnehmung (104) umgreift - normal zur Zustellbewegungsrichtung (9) der Reibbacken (100) - an vier Seiten jeweils zumindest partiell den Kraftaufnehmer (120). Letzterer sinkt beim Einbau in die Reibbacke (100) so tief ein, dass er maximal um einen

Überstand (142) von 0,1 mm über die Rückseite (101) der Reibbacke (100) hinausragt.

Der Kraftaufnehmer (120), vgl. Figuren 7 bis 9, besteht hier aus einem quaderförmigen Träger (121), der auf mindestens einer seiner Seitenflächen mindestens einen druckempfindlichen Sensor (125) einschließlich seiner elektrischen Anschlüsse (136-138) aufweist.

Der quaderförmige Träger (121), dessen Abmessungen z.B. 25 mm x 9 mm x 2 mm betragen, ist beispielsweise ein stählernes Einzelparallelendmaß nach DIN ISO 3650 der Toleranzklasse 2. Der Werkstoff ist in der DIN ISO 3650, der Ausgabe vom Dezember 1998, in Kapitel 6.2.1 angegeben. Derartige Endmaße haben allseitig polierte Oberflächen, deren Rauheitswert Rₐ jeweils unter 0,025 µm liegt, was sich für das Aufbringen eines piezoresistiven Dünnschichtsystems als vorteilhaft erweist.

Der Träger (121) ist auf seiner Oberseite (122), der polierten Stahloberfläche, direkt mit einer piezoresistiven Schicht homogen beschichtet. Durch Abscheiden von amorphem Kohlenwasserstoff im Plasma-Assisted-Chemical-Vapour-Deposition-Prozess entsteht diese kohlenstoffbasierte Halbleiterschicht, die eng verwandt ist mit der diamantähnlichen Kohlenstoffschicht DLC (diamond like carbon). Die z.B. 5 bis 7 µm dicke Schicht hat z.B. eine Härte von 20 bis 40 GPa. Diese sensorische Schicht wird strukturiert überzogen mit einer ca. 1 µm dicken elektrisch isolierenden Schicht aus einem mit Silizium und Sauerstoff modifizierten Kohlenwasserstoff. Die bisherige Oberseite (122) wird zudem mit einer z.B. 0,1 µm dünnen Chromschicht überzogen. Die Chromschicht wird nun mittels Fotolithografie und nasstechnischer Ätzung so strukturiert, dass sich im Ausführungsbeispiel an der Oberseite (122) drei separate Strukturen (126, 131, 134) ergeben. Die mittige, große Struktur ist eine Kraftsensorstruktur (126), die aus dem empfindlichen Drucksensorfeld (127), einer Lötstelle (136) und einem Verbindungssteg (128) besteht.

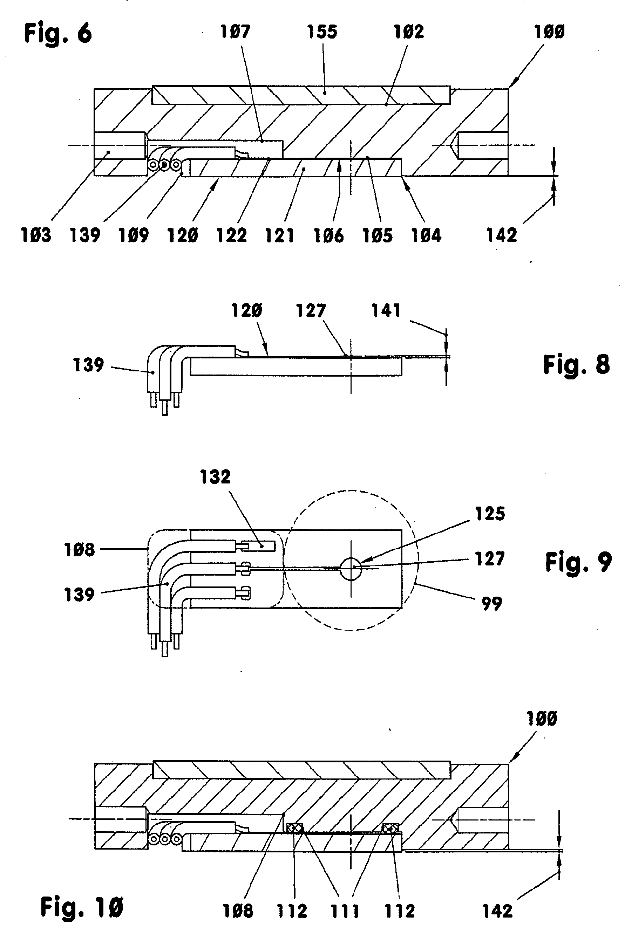

Nach Figur 9 befindet sich unterhalb der Lötstelle (136) der Kraftsensorstruktur (126) eine Massekontaktstruktur (134), die die Lötstelle (137) für den Masseanschluss ist. Letztere ist bis zum Grundwerkstoff des Trägers (121) durchkontaktiert. Oberhalb der Lötstelle (136) der Kraftsensorstruktur (126) ist eine größere Lötstelle (138) angeordnet, die zugleich als Temperaturfühlerstruktur (131) ein Vergleichsfeld (132) darstellt. Das Drucksensorfeld (127) hat idealerweise die gleiche Größe wie das für die Temperaturkompensation erforderliche Vergleichsfeld (132).

Die Lötstellen (136-138) sind zur Erleichterung der Kontaktierung z.B. mit einer Kupferschicht überzogen. Die restliche Fläche der Oberseite (122) ist zusätzlich mit einer Isolier- und Verschleißschutzschicht geschützt. Diese Schicht ist ggf. vergleichbar mit der Schicht, die direkt auf den Träger (121) aufgetragen wurde.

An den drei Lötstellen (136-138) sind jeweils Kabel (139) befestigt, die durch das Gehäuse (10) und die Ausnehmungen (19) in das Elektronikgehäuse (175) führen. In der dort angeordneten Auswerteelektronik werden in zyklischen Abständen die Widerstände des Drucksensorfelds (127) und des Vergleichsfelds (132) gemessen. Die Zeitabstände liegen zwischen 0,1 und 10 Millisekunden. Die Widerstände der Felder (127, 132) sind jeweils Teil einer in einer Differenzverstärkerschaltung integrierten Messbrücke. Zur Kompensation der den piezoresistiven Effekt begleitenden Temperaturempfindlichkeit werden während den Kraftmessungen das Drucksensorfeld (127) und das Vergleichsfeld (132) in Reihe geschaltet.

Der Kraftaufnehmer (120) wird im Ausführungsbeispiel, mit seiner empfindlichen Oberseite (122) voraus, in die Ausnehmung (104), z.B. durch bloßes Einsetzen, eingebaut. Das Drucksensorfeld (127) liegt somit am Grund (106) der Basisausnehmung (105) an. Um eine sichere Anlage des Drucksensorfelds (127) am Grund (106) zu gewährleisten, kann das Drucksensorfeld (127) die Umgebung auf der Oberseite (122) des Kraftaufnehmers (120) mit einer Überhöhung (141) von mindestens 5 µm überragen, vgl. Figur 8. Das wird beispielsweise dadurch realisiert, dass die kohlenstoffbasierte diamantähnliche Schicht mindestens zweifach übereinander auf den Grundwerkstoff des Trägers (121) aufgetragen wird.

Selbstverständlich ist es auch möglich, anstelle der kraftaufnehmerseitigen Überhöhung (141) am Gegenstück (96) des Kraftaufnehmers (120) einen entsprechenden Nocken oder Steg anzuordnen, so dass unabhängig von den Fertigungstoleranzen immer die Nocke oder der Steg sicher am Drucksensorfeld (127) anliegt.

Im Bereich der Lötstellen (136-138) und der Kabelnut (109) ist die Ausnehmung (104) einige zehntel Millimeter tiefer ausgelegt, vgl. Figur 6, um ausreichend Platz für die Kabel (139) und das Vergleichsfeld (132) zu lassen. Diese Basisvertiefung (107) hat z.B. eine eigene Tiefe von 2 mm. Das Vergleichsfeld (132) darf nicht den Grund (106) der Ausnehmung (104) kontaktieren, wie aus Figur 9 erkennbar ist. Dort ist der Rand (108) der Basisvertiefung (107) als senkrechte Projektion strichpunktiert dargestellt.

Da der Träger (121) nach hinten über die Reibbacke (100) mindestens 0,1 mm übersteht und seine Ausdehnung in Kraftrichtung nicht eng toleriert ist, kann er hier ein kostengünstiges Ausschussendmaß sein.

Nach Figur 10 ist der Kraftaufnehmer (120) in der Basisausnehmung (105) der Reibbacke (100) zumindest in Kraftrichtung (9) elastisch gelagert. Dazu sind im Grund (106) der Basisausnehmung (105) beispielsweise zwei längliche Nuten (111) eingearbeitet, wobei in jeder Nut (111) ein Elastomerstreifen (112) eingelegt ist. Die Elastomerstreifen (112), deren Härte jeweils mindestens 85 Shore A beträgt, lüften den Kraftaufnehmer (120) bei jeder Entlastung der Brems- und/oder Klemmvorrichtung im 10 bis 100 µm-Bereich. Anstelle der Nut (111) kann im Grund (106) der Basisausnehmung (105) auch eine Ringnut eingearbeitet sein, die das Drucksensorfeld (127) umgibt. In diese Ringut ist für die elastische Abfederung ein entsprechend formsteifer O-Ring, ein Quadring oder ein Ring mit rechteckigem Einzelquerschnitt eingelegt.

Die Reibbacke (100) ist geringfügig kürzer als die Tiefe des Gehäuses (10). In den normal zur Führungslängsrichtung (2) orientierten Stirnflächen der Reibbacken (100) befindet sich je eine Bohrung (103), in der jeweils fest ein Bolzen (151) - z.B. mittels Klemmkraft - montiert ist. Auf jedem Bolzen (151) sitzt ein elastischer O-Ring (152). Beide Bolzen (151) einer Reibbacke (100) fluchten zueinander.

An den beiden normal zur Längsrichtung orientierten Stirnflächen (21, 22) des Gehäuses (10) ist jeweils eine die Führungsschiene (1) mit Spiel teilweise umgreifende Stützplatte (170) befestigt, vgl. Figur 1. Die Stützplatte (170) hat jeweils im Bereich der Bolzen (151) eine gestufte Bohrung (171), wobei der Bohrungsbereich mit dem größeren Durchmesser zur benachbarten Reibbacke (100) ausgerichtet ist. In diesem Bohrungsbereich liegt der entsprechende O-Ring (152) an. Der andere Bohrungsbereich hat einen Durchmesser, der größer ist als die Summe aus dem Durchmesser des Bolzens (151) und dem doppelten Reibbackenhub.

Zwischen dem Druckstück (96) und der Einstellschraube (91) ist der Schiebekeil (92), umgeben von dem Käfig (95), angeordnet. Der Schiebekeil (92) ist ein trapezförmiger Körper mit rechteckigen Querschnitten, vgl. Figuren 4 und 3, Gehäusezone (11). Er ist starr, z.B. mittels einer Schraube (57) an einem in der Zylinderflächenbohrung (23) gelagerten Primärkolben (56) befestigt. Der Schiebekeil (92), der auch die Kolbenstange des Primärkolbens (56) darstellt, hat u.a. eine Stütz- (94) und eine Keilfläche (93). Beide Flächen sind rechteckig und z.B. plan. Die jeweils dem Druckstück (96) zugewandte Keilfläche (93) schließt mit diesem z.B. einen spitzen Winkel von 1 bis 5 Winkelgraden ein. Die Stützfläche (94) verläuft parallel zur Stirnfläche der benachbarten Einstellschraube (91). Beispielsweise verjüngen sich die Querschnitte des Schiebekeils (92) linear mit zunehmendem Abstand weg von der Kolbenstangenseite des Primärkolbens (56). Im Ausführungsbeispiel ist das erste Viertel der Länge des Schiebekeils (92) nicht abgeschrägt.

Der den Schiebekeil (92) umgebende Käfig (95) hat eine Querschnittsform, die mit Spiel in die Käfigsitzausnehmung (31) passt. Er hat mittig - parallel zur Führungslängsrichtung - einen rechteckigen Durchbruch, der geringfügig größer ist als der größte Querschnitt des Schiebekeils (92). Quer zu diesem Durchbruch befindet sich außermittig ein ebenfalls rechteckiger Durchbruch. Letzterer dient der Aufnahme der Zylinderrollen (161, 162). Der Durchbruch ist um ca. 7% der Käfiglänge aus der Käfigmitte heraus - von der Kolbenstangenseite des Primärkolbens (56) weg - versetzt. Die Höhen der Durchbrüche entsprechen z.B. der Länge der Zylinderrollen (161, 162). Beide Durchbrüche sind nicht höhenversetzt.

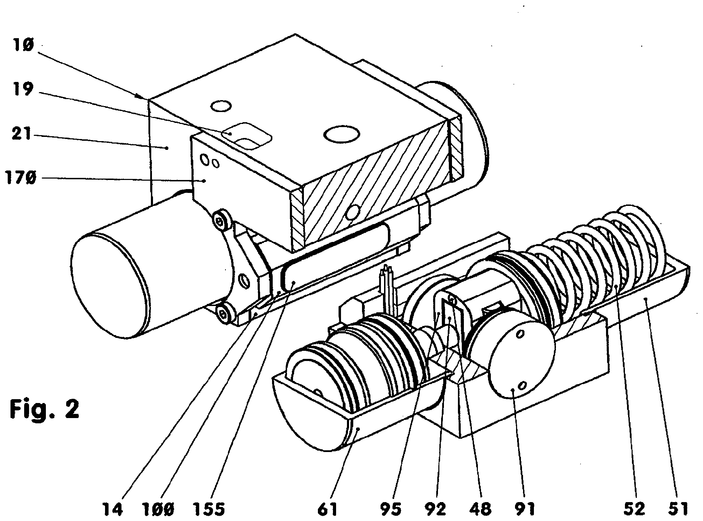

Im Feingewinde der Zylinderflächenbohrung (23) ist eine Federbüchse (51) eingeschraubt. Die Federbüchse (51), eine dünnwandige zylindrische Büchse mit planem Boden, lagert mindestens ein Federelement (52), das mit Vorspannung auf die Kolbenbodenseite des Primärkclbens (56) wirkt. In den Figuren 2 und 4 werden als Fecerelement jeweils eine Schraubendruckfeder (52) dargestellt. Ggf. kann im Innenraum dieser Feder (52) eine zweite Schraubendruckfeder mit entgegengesetzter Steigung angeordnet sein. Auch kann anstelle des Federelements (52), zur Bildung eines alternativen Federspeichers (50), eine Tellerfedersäule, ein Tellerfederpaket oder eine Kombination von beidem angeordnet werden.

Der in die Zylinderflächenbohrung (23) hineinragende Rand der Federbüchse (51) bildet einen Anschlag für den Primärkolben (56). Letzterer hat beispielsweise einen wirksamen Durchmesser von 30 mm.

An der anderen Stirnseite (21) des Gehäuses (10) befindet sich ein Stufenzylinder (61), der in das Feingewinde der Zylinderbüchsenbohrung (38) eingeschraubt ist. Der Stufenzylinder (61) hat z.B. eine zylindrische Außenkontur und einen planen Boden. Seine geometrischen Außenabmessungen entsprechen denen der Federbüchse (51). Die Innenkontur des Stufenzylinders (61) setzt sich aus zwei abgestuften Kolbenlaufflächen (62, 63) zusammen. Am bundartigen Übergang der Kolbenlaufflächen (62, 63) sitzt ein dichtend eingesetzter Trennboden (64) mit zentraler Bohrung (65). Er wird in seiner Position mittels eines Sicherungsringes (66) axial gehalten. Die zentrale Bohrung (65) des Trennbodens (64) führt die Kolbenstange (83) eines Tertiärkolbens (81). Die Bohrung (65) ist gegenüber der Tertiärkolbenstange (83) mit einem Dichtring abgedichtet. Die Kolbenstange (83) hat eine zentrale - auch den Kolben (81) durchdringende - Durchgangsbohrung (84), deren Durchmesser ca. der Hälfte des Außendurchmessers der Kolbenstange (83) entspricht. Der Durchmesser beträgt nach Figur 4 beispielsweise 3 mm. Der wirksame Durchmesser des Tertiärkolbens (81) entspricht z.B. 86% des wirksamen Primärkolbendurchmessers.

In die Stirnfläche des freien Endes der Tertiärkolbenstange (83) ist eine Quernut (85) eingearbeitet, deren Querschnitt z.B. einen Quadratmillimeter beträgt, vgl. Schnitt der Gehäusezone (12) in Figur 3. Ggf. sind in die Stirnfläche mehrere Quernuten eingefräst.

Zwischen dem Tertiärkolben (81) und dem Primärkolben (56) ist ein Sekundärkolben (71) angeordnet. Letzterer sitzt beweglich in der Kolbenlauffläche (63) des Stufenzylinders (61). Sein wirksamer Durchmesser beträgt z.B. 90% des wirksamen Primärkolbendurchmessers. Der Kolben (71) weist an seiner Bodenseite eine Eindrehung (72) auf, deren Querschnitt etwas größer ist als der in den Zylinderraum hineinragende Querschnitt des Sicherungsringes (66). Am Sekundärkolben (71) ist ebenfalls eine Kolbenstange (73) angeformt. Auch diese Kolbenstange (73) hat eine zentrale Durchgangsbohrung (74), die ihr freies Ende mit dem der Kolbenbodenseite des Kolbens (71) verbindet. Der Durchmesser der Bohrung (74) entspricht dem der Bohrung (84). Auch die Sekundärkolbenstange (73) weist an ihrer Stirnfläche mindestens eine Quernut (75) auf. Ihr Querschnitt entspricht dem der Quernut (85).

Alle Kolben haben in ihrer zylindrischen Umfangsfläche eine Ringnut, in der jeweils mindestens ein Dichtring gelagert ist. Der Dichtring des Primärkolbens ist hier eine Lippendichtung, während z.B. die anderen Dichtungen O-Ringe mit rundem, elliptischem oder annähernd rechteckigem Querschnitt sind. Die Kolbenböden haben, sofern sie an planen Flächen anliegen, zumindest radiale Kerben bzw. Nuten, um einströmendes Druckmittel schnell auf die gesamte aktive Kolbenfläche wirken lassen zu können. Zur Minimierung der trägen Kolbenmasse können die Kolben an ihren Stirnflächen entsprechende Eindrehungen haben.

Als Alternative für die angeformten Kolbenstangen (73, 33) der Kolben (71, 81) kann auch eine - beide Kolben (71, 81) verbindende - Kolbenstange verwendet werden, auf der z.B. die Kolben mittels Gewinde aufgeschraubt sind. Es ist auch denkbar, die Kolbenstange (83) mit dem Sekundärkolben (71) aus einem Stück zu fertigen, den Trennboden (64) auf diese angeformte Kolbenstange aufzuschieben und abschließend den Tertiärkolben (81) auf letzteren aufzuschrumpfen.

Während des Normalbetriebes des die Vorrichtung tragenden Schlittens wird ein im Gehäuse (10) liegender Druckluftzuführkanal (47) mit Druckluft versorgt. Der Kanal (47) mündet in den Gehäusezonen (11, 12) in die jeweiligen Hauptbohrungen (42), vgl. Figur 3. Die Druckluft gelangt von dort aus - vgl. Figur 4, Gehäusezone (12) - u.a. über den Spalt zwischen dem Käfig (95) und der Käfigsitzausnehmung (31) in den Druckraum (58) vor die Kolbenstangenseite des Primärkolbens (56). Der Primärkolben benutzt den freien Rand der Federbüchse (51) als Anschlag. Der Schiebekeil (92) befindet sich in seiner hinteren Position. Die Zylinderrollen (161, 162) sitzen unbelastet im Käfig (95). Der einzelne Käfig (95) wird jeweils von zwei Schraubenfedern (49), die in den Käfigbohrungen (48) eingesteckt sind und sich am Boden der Käfigsitzausnchmung (31) abstützen, gegen die Anschlagscheibe (28) gedrückt. Das jeweilige Druckstück (96) liegt bei weitgehend entlastetem, aber dennoch dichtenden Rückhubring (98) in der Regel nicht an der Reibbacke (100) an. Der Rückhubring (98) hat noch mindestens so viel Vorspannung, dass das Druckstück (96), die Zylinderrollen (161, 162) und der Schiebekeil (92) spielfrei an der Einstellschraube (91) anliegen.

Die Reibbacke (100) wird von den O-Ringen (152) gegen die Wandung der Umgriffsnut (14) gedrückt, so dass der Reibbelag (155) die Stegfläche (6) der Führungsschiene (1) nicht berührt.

Am freien Ende des Schiebekeils (92) liegt das freie Ende der Kolbenstange (73) des Sekundärkolbens (71) an. Über die dortige Quernut (75) steht die Druckluft in der Durchgangsbohrung (74) und dem zwischen dem Sekundärkolben (71) und dem Trennboden (64) gelegenen Druckraum (76) an. Direkt auf dem Sekundärkolben (71) stützt sich der Tertiärkolben (81) mit seiner hohlen Kolbenstange (83) ab. Auch hier liegt über die Durchgangsbohrung (84) Druckluft in dem zwischen dem Tertiärkolben (81) und dem Boden des Stufenzylinders (61) gelegenen Druckraum (86) an.

Die an allen drei sich gegeneinander abstützenden Kolben (56, 71, 81) anstehende Druckluft hält die als Federspeicher dienende Schraubendruckfeder (52) unter Spannung.

Fällt nun im Druckluftzuführkanal (47) die Druckluft ab, unabhängig davon, ob eine Systemstörung vorliegt, ein Bremsvorgang eingeleitet werden soll oder ob nur der Schlitten festgeklemmt oder geparkt werden soll, schiebt die jeweilige Schraubendruckfeder (52) den Schiebekeil (92) über den Primärkolben (56) in die Käfigsitzausnehmung (31) hinein, vgl. Figur 4, Gehäusezone (11). Über die im Bereich des Feingewindes der Federbüchse (51) vorhandene Entlüftungshalbrundnut (25) strömt Umgebungsluft in den vom Federelement (52) ausgefüllten Raum.

Der Schiebekeil (92) schiebt dabei die Kolben (71, 81) über ihre Kolbenstangen (73, 83) vor sich her. Im Bereich der Gehemmebohrung (41) legen sich mit zunehmendem Schiebekeilhub die Flächen (93, 94) an den im Käfig (95) geführten Zylinderrollen (161, 162) spielfrei an. Die außenliegende Zylinderrolle (161) stützt den Schiebekeil (92) an der Einstellschraube (91) ab, während die Zylinderrolle (162) das Druckstück (96) gegen den Widerstand des Rückhubringes (98) gegen die Reibbacke (100) schiebt. Das Druckstück (96) legt sich am Kraftaufnehmer (120) an. Die dem Kraftaufnehmer (120) zugewandte Stirnseite des Druckstückes (96) kontaktiert dessen Drucksensor (125) mit dem mittleren stirnseitigen Bereich. In Figur 9 ist dazu der Rand (99) dieser Stirnseite des Druckstücks (96) gestrichelt dargestellt. Eine geringfügige Außermittigkeit von z.B. 1 mm ist den Figuren 3 und 9 entnehmbar, vgl. Mittellinie (46).

Die Zylinderrollen (161, 162) wälzen nun zwischen den Bauteilen (91, 92, 96) so lange ab, bis sich im Ausführungsbeispiel ein Kräftegleichgewicht zwischen der Federkraft des Gehäuses (10) und der Federkraft des Federelements (52) eingestellt hat. Dann haben die beiden Reibgehemme (90) ihre maximale Klemmkraft erreicht. Die Reibbacken (100) liegen über die Reibbeläge (155) an den Stegflächen (6) der Führungsschiene (1) an. Die für den Rückhub der Rcibbacken (100) zuständigen O-Ringe (152) sind vorgespannt elastisch verformt.

Da die Zylinderrollen (161, 162) während des Abwälzvorganges entlang dem Druckstück (96) wandern, können je nach Baugröße oder Typ der Brems- und/oder Klemmvorrichtung am Kraftaufnehmer (120) mehrere Drucksensoren hintereinander oder versetzt nebeneinander angeordnet werden.

### Bezugszeichenliste:

- 1: Führungsschiene, doppeltrapezförmig
- 2: Führungslängsrichtung, Mittellinie
- 3: vertikale Mittelebene
- 4, 5: Führungsflächen
- 6: Stegfläche
- 7: Bodenfläche
- 8: Maschinenbett
- 9: Zustellbewegungsrichtung, Kraftrichtung

- 10: Gehäuse
- 11: Gehäusezone, rechts
- 12: Gehäusezone, links
- 13: Flanschzone
- 14: Umgriffsnut
- 19: Ausnehmungen für Sensorkabelführung

- 21: Stirnflächen, Stirnseite
- 22: Stirnflächen, Stirnseite, federseitig
- 23: Zylinderflächenbohrung
- 24: Quetschring
- 25: Entlüftungshalbrundnut
- 28: Anschlagscheibe
- 29: Sicherungsring

- 31: Käfigsitzausnehmung, Ausnehmung
- 32: Kontur
- 34: Kolbenstangenbohrung, Stangenbohrung
- 35: Dichtring
- 36: Stützscheibe
- 37: Sicherungsring
- 38: Zylinderbüchsenbohrung
- 39: Mittellinie

- 41: Gehemmebohrung
- 42: Hauptbohrung
- 43: Durchdringungslinie
- 44: Druckstückführungsbohrung
- 45: Austrittsbohrung
- 46: Mittellinie
- 47: Druckluftzuführkanal
- 48: Käfigbohrungen
- 49: Schraubenfedern

- 50: Federspeicher, Stellglied, Federsystem
- 51: Federbüchse
- 52: Federelement, Schraubendruckfeder, Feder

- 55: Stellglied, fremdenergieangetrieben
- 56: Primärkolben
- 57: Schraube
- 58: Druckraum

- 61: Stufenzylinder
- 62: Kolbenlauffläche in Bodennähe
- 63: Kolbenlauffläche in Randnähe
- 64: Trennboden
- 65: Bohrung
- 66: Sicherungsring

- 70: Stellglied, fremdenergieangetrieben
- 71: Sekundärkolben
- 72: Eindrehung
- 73: Sekundärkolbenstange, Kolbenstange
- 74: Durchgangsbohrung, zentral
- 75: Quernut
- 76: Druckraum

- 80: Stellglied, fremdenergieangetrieben
- 81: Tertiärkolben
- 83: Tertiärkolbenstange, Kolbenstange
- 84: Durchgangsbohrung, zentral
- 85: Quernut
- 86: Druckraum

- 90: Reibgehemme
- 91: Einstellschraube
- 92: Schiebekeil
- 93: Keilfläche
- 94: Stützfläche
- 95: Käfig
- 96: Druckstück, Gegenstück, Getriebeteil
- 97: Stirnfläche
- 98: Rückhubring, elastisch
- 99: Rand des Druckstücks (96)

- 100: Reibbacke
- 101: Rückseite von (100)
- 102: Belagvertiefung
- 103: Bohrung für (151)
- 104: Ausnehmung für (120)
- 105: Basisausnehmung
- 106: Grund
- 107: Basisvertiefung
- 108: Rand der Basisvertiefung (107)
- 109: Kabelnut

- 111: Nut für (112)
- 112: Elastomerstreifen, Q-Ring, Quadring

- 120: Kraftaufnehmer
- 121: Träger
- 122: Trägeroberfläche, sensorseitig, Oberseite

- 125: Sensor, Drucksensor, Dünnschichtsensor
- 126: Kraftsensorstruktur
- 127: Drucksensorfeld, Feld
- 128: Verbindungssteg

- 131: Temperaturfühlerstruktur
- 132: Vergleichsfeld, Feld
- 134: Massekontaktstruktur
- 136-138: Lötstellen, Anschlüsse, elektrisch
- 139: Kabel, geschirmt

- 141: Überhöhung
- 142: Überstand

- 151: Bolzen
- 152: O-Ring
- 155: Reibbelag
- 161: Zylinderrolle, außenliegend
- 162: Zylinderrolle, innenliegend

- 170: Stützplatten
- 171: Bohrung, gestuft

- 175: Elektronikgehäuse
- 176: Gehäusedeckel
- 177: Ausgangsstecker

## Patentansprüche

1. Brems- und/oder Klemmvorrichtung eines an mindestens einer Führungsschiene (1) geführten Schlittens,
- wobei die Vorrichtung mindestens ein über ein Getriebe (92, 107, 96) betätigbares Reibgehemme (90) umfasst, das wenigstens eine in einem Gehäuse (10) gelagerte, an die Führungsschiene (1) anpressbare Reibbacke (100) aufweist,
- wobei das mit Hilfe von Fremdenergie bewegte Getriebe (92, 162, 96), zur Be- und zur Entlastung des Reibgehemmes (90), pro Be- und Entlastungsrichtung mittels mindestens eines Stellgliedes (55, 70, 80) oder eines Federspeichers (50), der mindestens ein Federelement (52) umfasst, bewegbar ist,
**dadurch gekennzeichnet,**
- **dass** sich quer zur Richtung des Kraftflusses der aufzubauenden Brems- und/oder Klemmkraft ausbreitend, mindestens ein druckkraftaufnehmender Dünnschichtsensor (125) im Bereich mindestens eines Reibgehemmes (90) angeordnet ist und
- **dass** der Dünnschichtsensor (125) innerhalb des oder der Reibgehemme (90) in der jeweiligen Reibbacke (100) integriert ist.

2. Vorrichtung gemäß Anspruch 1, **dadurch gekennzeichnet, dass** der druckempfindliche Dünnschichtsensor (125) Teil eines Kraftaufnehmers (120) ist.

3. Vorrichtung gemäß Anspruch 2, **dadurch gekennzeichnet, dass** der Kraftaufnehmer (120) einen Träger (121) aus einem metallischen oder keramischen Werkstoff aufweist, auf dem auf mindestens einer Oberfläche (122) oder Seite zur Ausbildung des Dünnschichtsensors (125) eine piezoresistive Kohlenstoffschicht aufgetragen ist.

4. Vorrichtung gemäß Anspruch 2, **dadurch gekennzeichnet, dass** der Kraftaufnehmer (120) pro Oberfläche (122) oder Seite mindestens zwei separate piezoresistive Sensorfelder (127, 132) aufweist, von denen mindestens eines für die Kraftmessung und mindestens eines für die Temperaturmessung verwendbar ist.

5. Vorrichtung gemäß Anspruch 2, **dadurch gekennzeichnet, dass** der Träger (121) des Kraftaufnehmers (120) ein Einzelparallelendmaß nach DIN ISO 3650 ist.

6. Vorrichtung gemäß Anspruch 2, **dadurch gekennzeichnet, dass** das die Oberseite des für die Kraftmessung vorgesehenen Sensorfeldes (127) die Oberseite (122) des Kraftaufnehmers (120) um mindestens 5 µm überragt.

7. Verfahren zur Erfassung und Auswertung des Betriebszustandes einer Brems- und/oder Klemmvorrichtung nach Anspruch 1, **dadurch gekennzeichnet,**
**dass** der Brems- und/oder Klemmvorrichtung eine Auswerteelektronik nachgeschaltet ist, die aus den vom druckkraftaufnehmenden, innerhalb des oder der Reibgehemme (90) in der jeweiligen Reibbacke (100) integrierten, Dünnschichtsensor (125) gelieferten Signalen das Bremsen und/oder Klemmen der Vorrichtung erfasst, die jeweilige Brems- und/oder Klemmkraft ermittelt, die Anzahl aller Brems- und/oder Klemmvorgänge zählt, die Temperatur der Reibbeläge (155) ausgibt und aus der Änderung der Höhe der Brems- und/oder Klemmkraft von mindestens 50 Prozent aller Brems- und/oder Klemmvorgänge den Verschleiß dokumentiert, um ein Wartungs- oder Vorrichtungstausch anzuzeigen.

8. Verfahren nach Anspruch 7, **dadurch gekennzeichnet, dass** die Temperatur des Kraftaufnehmers (120) oder des drucksensortragenden Bereiches der Vorrichtung ausgebbar ist.

## Claims

1. Braking and/or clamping apparatus associated with a slide guided along at least one guide rail (1),
- the apparatus comprising at least one frictional motion inhibiting means (90) adapted to be actuated via transmitting means (92, 107, 96), said motion inhibiting means including at least one friction liner (100) mounted in a casing (10) and adapted to be urged against the guide rail (1); and
- with the transmitting means (92, 162, 96) driven by means of external energy and being movable by means of at least one actuator (55, 70, 80) or spring-type energy storage element (50) comprising at least one spring member (52) for loading and unloading the frictional motion inhibiting means (90) per loading and unloading direction;
**characterized in that**
- at least one pressure-force receiving thin-layer sensor (125) is disposed within the area of at least one motion inhibiting means (90) and transversely to the direction of the flow of force of the braking and/or clamping force to be built up, and **in that**
- the thin-layer sensor or sensors (125) is or are integrated within the frictional motion inhibiting means (90) in the friction line or liners (100) associated therewith.

2. Apparatus as claimed in claim 1, **characterized in that** the pressure-sensitive thin-layer sensor (125) is part of a force receiving transducer (120).

3. Apparatus as claimed in claim 2, **characterized in that** the force receiving transducer (120) comprises a carrier member (121) of a metal or ceramic material, the carrier member having applied to at least one surface (122) or side thereof a piezoresistive carbon layer for forming the thin-layer sensor (125).

4. Apparatus as claimed in claim 2, **characterized in that** the force receiving transducer (120) has at least two separate piezoresistive sensor fields (127, 132) per surface (122) or side, with at least one of said fields adapted o be used for measuring force and at least one for measuring temperature.

5. Apparatus as claimed in claim 2, **characterized in that** the carrier member (121) of the force receiving transducer (120) is a single parallel gauge block as defined by DIN ISO 3650.

6. Apparatus as claimed in claim 2, **characterized in that** the top surface of the sensor field (127) provided for measuring force protrudes to a level at least 5 µm higher than the top surface (122) of the force receiving transducer (120).

7. Method of detecting and evaluating the operational status of a braking and/or clamping apparatus of claim 1, **characterized in that**
- the braking and/or clamping apparatus is coupled to evaluating electronics configured to derive the braking and/or clamping condition of the apparatus from the signals provided by the pressure force receiving thin-layer sensor or sensors (125) integrated within the frictional motion inhibiting means (90) in the respective friction liner (100) and to count the number of all braking and/or clamping events, to indicate the temperature of the friction liners (155) and to document the magnitude of the braking and/or clamping forces of at least 50 percent of all braking and/or clamping events to indicate liner wear and the necessity of apparatus maintenance and replacement.

8. Method as claimed in claim 7, **characterized by** including provisions to output the temperature of the force receiving transducer (120) or of the apparatus area of the apparatus carrying the pressure sensor.

## Revendications

1. Dispositif de freinage et/ou de serrage d'un chariot (1) guidé sur au moins un rail,
- le dispositif comprenant au moins un dispositif de ralentissement par friction (90) qui peut être actionné par une transmission (92, 107, 96) présentant au moins une mâchoire à friction (100) qui est logée dans un carter (10) et qui peut être pressée contre le rail de guidage (1),
- la transmission (92, 162, 96) commandée à l'aide d'une énergie extérieure pouvant être déplacée, pour le chargement et le déchargement du dispositif de ralentissement par friction (90), dans chaque direction de chargement et de déchargement à l'aide d'au moins un actionneur (55, 70, 80) ou d'un accumulateur à ressort (50) qui comprend au moins un élément à ressort (52),
**caractérisée en ce**
- **qu'**au moins un capteur de force de pression à couche mince (125) est disposé dans la direction transverse à la direction du flux des forces, dans la zone d'au moins un dispositif de ralentissement par friction (90),
- **que** le capteur à couche mince (125) est intégré à l'intérieur du ou des dispositifs de ralentissement par friction (90), dans la mâchoire à friction correspondante (100).

2. Dispositif selon la revendication 1, **caractérisé en ce que** le capteur à couche mince sensible à la pression (125) fait partie d'un capteur de force (120).

3. Dispositif selon la revendication 2, **caractérisé en ce que** le capteur de force (120) présente un support (121) réalisé dans un matériau métallique ou céramique sur lequel une couche de carbone piézorésistive devant former le capteur à couche mince (125) a été appliquée sur au moins une surface (122) ou un côté.

4. Dispositif selon la revendication 2, **caractérisé en ce que** pour chaque surface (122) ou pour chaque côté le capteur de force (120) présente au moins deux champs de détection piézorésistifs séparés (127, 132) dont au moins un peut être utilisé pour mesurer la force et au moins un pour mesurer la température.

5. Dispositif selon la revendication 2, **caractérisé en ce que** le support (121) du capteur de force (120) est une cale étalon parallèle individuelle selon la norme DIN ISO 3650.

6. Dispositif selon la revendication 2, **caractérisé en ce que** la partie supérieure du champ de détection (127) prévu pour la mesure de force, dépasse la partie supérieure (122) du capteur de force (120) d'au moins 5 µm.

7. Procédé pour la saisie et l'évaluation de l'état de fonctionnement d'un dispositif de freinage et/ou de serrage selon la revendication 1, **caractérisé en ce**
**qu'**une unité électronique d'évaluation est installée en aval du dispositif de freinage et/ou de serrage qui détecte le freinage et/ou le serrage du dispositif à partir des signaux venant du capteur de force de pression à couche mince (125) intégré à l'intérieur du ou des dispositifs de ralentissement par friction (90), dans la mâchoire à friction correspondante (100), qui détermine la force de freinage et/ou de serrage correspondante, compte le nombre de toutes les actions de freinage et/ou de serrage, affiche la température des garnitures de frein (155) et documente l'usure des garnitures de frein en tenant compte du changement de niveau de la force de freinage et/ou de serrage d'au moins 50 pourcent de toutes les actions de freinage et/ou de serrage afin d'indiquer un remplacement nécessaire du dispositif.

8. Procédé selon la revendication 7, **caractérisé en ce que** la température du capteur de force (120) ou de la zone logeant le détecteur de pression du dispositif peut être affichée.
